(19) Europäisches Patentamt
European Patent Office
Office européen des brevets

(11) Publication number: **0 191 839**
**B1**

# (12) EUROPEAN PATENT SPECIFICATION

(45) Date of publication of patent specification: **14.12.88**

(51) Int. Cl.[4]: **C 07 C 43/20**

(21) Application number: **85904344.0**

(22) Date of filing: **19.08.85**

(86) International application number: **PCT/US85/01580**

(87) International publication number: **WO 86/01199 27.02.86 Gazette 86/05**

## (54) ARYL ETHER KETONE COPOLYMERS.

(30) Priority: **20.08.84 US 643222**

(43) Date of publication of application: **27.08.86 Bulletin 86/35**

(45) Publication of the grant of the patent: **14.12.88 Bulletin 88/50**

(84) Designated Contracting States: **AT BE CH DE FR GB IT LI NL SE**

(56) References cited:
EP-A-0 124 276
EP-A-0 135 938
GB-A-1 086 021
US-A-3 065 205
US-A-3 516 966
US-A-3 956 240

(73) Proprietor: **RAYCHEM CORPORATION (a Delaware corporation)**
**300 Constitution Drive**
**Menlo Park, California 94025 (US)**

(72) Inventor: **MOORE, Stephen**
**314 Grand Street**
**Redwood City, CA 94062 (US)**
Inventor: **JANSONS, Viktors**
**123 New York Avenue**
**Los Gatos, CA 95030 (US)**
Inventor: **DAHL, Klaus, Joachim**
**98 Juniper Street**
**Atherton, CA 94025 (US)**

(74) Representative: **Jay, Anthony William et al**
**Raychem Limited Intellectual Property Law**
**Department Faraday Road**
**Dorcan Swindon Wiltshire (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 191 839 B1

**Description**

This invention relates to poly(aryl ether ketones) and in particular to copolymeric poly(aryl ether ketones).

Poly(arylene ketones), in particular, all para-linked poly(aryl ether ketones), possess many desirable properties, for example, high temperature stability, mechanical strength, and resistance towards common solvents. The preparation of poly(aryl ether ketones) by two different approaches has been described in the literature. The first approach is an electrophilic synthesis in which an aryl ketone linkage is formed. The second is a nucleophilic synthesis in which an aryl ether linkage is formed.

Efforts in recent years have been directed to the development of economical processes for commercial manufacture of these polymers. One factor considered is the economics is the cost of the monomer(s) used in preparing the polymer. One economically attractive polymer is described in U.S. Patent No. 3,065,205 to Bonner and is produced from diphenyl ether and terephthaloyl chloride. The resulting polymer contains all para-linkages but is reported in U.S. Patent No. 3,516,966 to Berr to be non-melt processable and subject to degradation under melt processing conditions. The problem is avoided by Berr by the use of a mixture of terephthaloyl and isophthaloyl chloride together with diphenyl ether.

It has been found that preparation of the all para-linked polymer derived from diphenyl ether and terphthaloyl chloride by the electrophilic process described by Bonner and Berr results in a polymer of relatively low molecular weight. A further disadvantage of the polymer is addressed in U.S. Patent No. 3,767,620 to Angelo et al. Polymers prepared from diphenyl ether and terephthaloyl chloride or mixtures of tere- and isophthaloyl chlorides are reported to contain xanthydrol end groups which tend to make the polymer melt unstable. Angelo's solution to the problem is to react the polymer with a reducing agent. While such reduction may improve melt stability to a certain extent, the reduced end groups are likely to undergo air oxidation at elevated temperatures due to the presence of tertiary hydrogen atoms.

We have now discovered that high molecular weight, commercially viable, melt processable polymer can be prepared from diphenyl ether and terephthaloyl chloride by the addition of an appropriate comonomer. The resulting copolymer has higher molecular weight, lower xanthydrol end group content and improved melt stability over the polymer prepared from diphenyl ether and terephthaloyl chloride.

One aspect of this invention provides an (aryl ether ketone) copolymer having recurring units of the formula

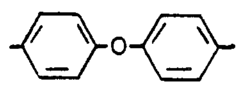

A

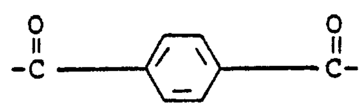

B

and

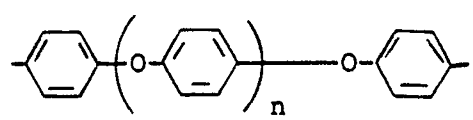

,C

where n is 1 or 2, the total number of A and C recurring units being equal to the number of B recurring units, and having an inherent viscosity (as hereinafter defined) of at least 0.6.

Another aspect of this invention comprises a method of preparing such a copolymer which comprises reacting under Friedel-Crafts conditions in the presence of a Lewis acid, the following monomers:

(a) 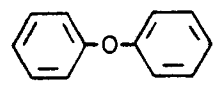

(b) 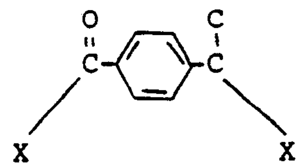

and

(c) 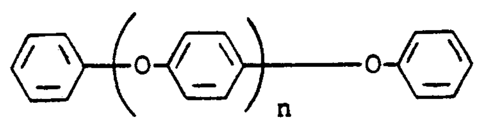

wherein X is a group displaceable under the Friedel-Crafts polymerisation conditions, n is 1 or 2, and the number of moles of (a) plus (c) is equal to the number of moles of (b).

Particularly preferred polymers are prepared from terephthaloyl chloride, diphenyl ether and 1,3-diphenoxybenzene.

Monomer (a) used in preparing the poly(aryl ether ketones) of this invention is diphenyl ether, i.e. the compound of the formula:

(a) 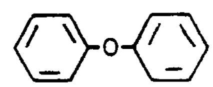

Monomer (b) is a diacid compound of the formula:

(b) 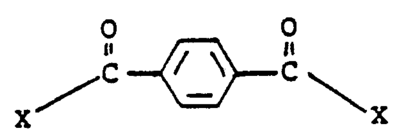 ,

wherein X is a group displaceable under Friedel-Crafts polymerization conditions. X can be, for example, hydroxy, halo, e.g. chloro, fluoro or bromo, or alkoxy, e.g. methoxy, ethoxy, propoxy, isopropoxy, or butoxy. Preferably (b) is terephthaloyl chloride.

Monomer (c) is an aryl ether of the formula:

(c) 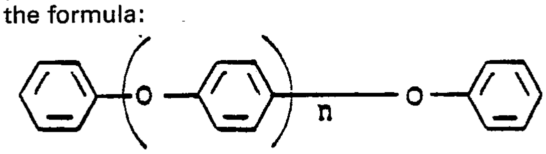

where n is 1 or 2, that is 1,4-diphenoxybenzene and 1-phenoxy-4-(p-phenoxyphenoxy)benzene.

The molar amount of (a) plus (c) should be substantially equal to the molar amount of (b). The mole ratio of (a) to (c) can vary from 95:5 to 5:95, that is 95—5 moles diphenyl ether to 5—95 moles of 1,4-diphenoxybenzene or 1-phenoxy-4-(p-phenoxyphenoxy)benzene, preferably the mole ratio of (a) to (c) is 80:20 to 20:80, especially 50:50.

The polymers are prepared by Friedel-Crafts polymerization. In general the process comprises reacting the monomers together in the presence of a Lewis acid.

The term "Lewis acid" is used herein to refer to a substance which can accept an unshared electron pair from another molecule. Lewis acids which can be used in the practice of this invention include, for example, aluminum trichloride, aluminum tribromide, antimony pentachloride, antimony pentafluoride, indium trichloride, gallium trichloride, boron trichloride, boron trifluoride, zinc chloride, ferric chloride, stannic chloride, titanium tetrachloride, and molybdenum pentachloride.

The polymerization may be carried out in the presence of a diluent. Preferred diluents include methylene chloride, carbon disulfide, o-dichlorobenzene, 1,2,4-trichlorobenzene, o-difluorobenzene, 1,2-dichlorothane, and 1,1,2,2-tetrachloroethane.

A preferred process for the preparation of the copolymers of this invention comprises using hydrogen fluoride and boron trifluoride as the reaction medium. This type of process is described in U.S. Patents Nos. 3,953,400 and 4,247,682 to Dahl and U.S. Patent No. 3,956,240 to Dahl and Jansons, the disclosures of

which are incorporated herein by reference.

A second, and most preferred, method for preparing the copolymers of this invention is described in copending application Serial No. 594,503, filed March 29, 1984, the disclosure of which is incorporated herein by reference. This application discloses a method of moderating or controlling Friedel-Crafts polymerization of this type. This can be accomplished by the addition of a Lewis base which acts as a controlling agent of by utilizing specified amounds of the Lewis acid. The term "Lewis base" is used to define any substance capable of donating an unshared electron pair to the Lewis acid.

Preferred Lewis bases for preparing the copolymers of this invention are N-methylformamide, N,N-dimethylformamide, N,N-dimethylacetamide, 1-methyl-2-pyrrolidone, tetramethylene sulfone (also known as sulfolane), n-butyronitrile, dimethyl sulfide, imidazole, acetone, benzophenone, trimethylamine, trimethylamine hydrochloride, tetramethylammonium chloride, pyridine-N-oxide, 1-ethylpyridinium chloride, lithium chloride, lithium bromide, sodium chloride, sodium bromide, potassium chloride, potassium bromide and mixtures thereof.

The amount of Lewis base present should be from 0 to about 4 equivalents per equivalent of acid halide groups present in the monomer system. Amounts greater than 4 equivalents could be employed, if desired. However, no additional controlling effect is usually achieved by adding larger amounts. Thus, it is preferred to use no more than about 4 equivalents and generally no more than about 2 equivalents. When a Lewis base is added to control the reaction, at least about .01, preferably at least about 0.05 and most preferably at least about 0.5 equivalents of Lewis base per equivalent of acid halide groups present should be used.

The temperature at which the reaction is conducted is not critical and can be from about −70°C to about +150°C, or even higher. It is preferred to start the reaction at lower temperatures, for example at about −50°C to about −10°C particularly if the monomer system contains highly reactive monomers. After polymerization has commenced, the temperature can be raised if desired, for example, to increase the rate of reaction. It is generally preferred to carry out the reaction at temperatures in the range of between about −30°C and +25°C (room temperature).

The reaction can also be moderated by use of appropriate excess of Lewis acid. In general, the amount of Lewis acid used in an amount of at least one equivalent per equivalent of carbonyl and other basic groups present in the reaction mixture plus an amount effective to act as a catalyst. In preparing the copolymers of this invention the catalytically effective amount should be between about 0.003 and about 0.5 equivalent per equivalent of acid halide groups.

The copolymers of this invention are high molecular weight polymers. By "high molecular weight" is meant polymer having an inherent viscosity of at least 0.6. Preferably the polymer prepared by the process of this invention has an inherent viscosity in the range of about 0.6 to about 2.0. Polymers having an inherent viscosity below about 0.6 are generally not useful because they have poor mechanical properties, such as tensile strength and elongation. They also tend to be brittle, while polymers having an inherent viscosity above about 2.0 are very difficult to melt process. Throughout this application, inherent viscosity refers to the mean inherent viscosity determined according to the method of Sorenson et al, "Preparative Methods of Polymer Chemistry" Interscience (1968), at page 44 [0.1 g polymer dissolved in 100 ml of concentrated sulfuric acid at 25°C].

If desired, the molecular weight of the polymer, the degree of branching and amount of gelation can be controlled by the use of, for example, capping agents as described in U.S. Patent No. 4,247,682 to Dahl, the disclosure of which is incorporated herein by reference. The molecular weight of the polymer can also be controlled by a polymerization reaction utilizing a two-monomer system as described above, by employing a slight excess of one of the monomers.

Capping agents, when employed, are added to the polymerization reaction medium to cap the polymer on at least one end of the polymer chain. This terminates continued growth of that chain and controls the resulting molecular weight of the polymer, as shown by the inherent viscosity of the polymer. Judicious use of the capping agents results in a polymer within a selected narrow molecular weight range, decreased gel formation during polymerization, and decreased branching of the polymer chains and increases melt stability. Both nucleophilic and electrophilic capping agents are used to cap the polymer at each end of the chain.

Preferred nucleophilic capping agents are 4-chlorobiphenyl, 4-phenoxybenzophenone, 4-(p-phenoxyphenoxy)-benzophenone, biphenyl, and 4-benzenesulfonylphenyl phenyl ether.

Typical electrophilic capping agents are compounds of the formula

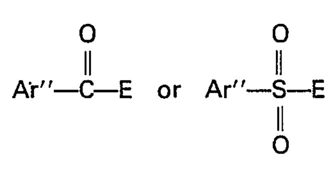

wherein Ar'' is phenyl, 3-chlorophenyl, 4-chlorophenyl, 4-cyanophenyl, 4-methylphenyl, phenoxyphenyl, naphthyl, biphenyl or an aromatic group substituted with an electron withdrawing substituent and E is

halogen or others leaving group. Preferred electrophilic capping agents include benzoyl chloride and benzenesulfonyl chloride.

In the preparation of the copolymers of this invention, a Lewis acid is employed. As a result, the polymer contains Lewis acid complexed to the carbonyl groups of the polymer. For many polymerizations, the Lewis acid is complexed to substantially all the carbonyl groups in the polymer. As is well known with polymers of this type, the catalyst residue must be removed, i.e. the Lewis acid must be decomplexed from the polymer and removed. A method for removing the catalyst residue is described in U.S. Patent No. 4,237,884 to Dahl, the disclosure of which is incorporated herein by reference.

Decomplexation can be accomplished by treating the polymerization reaction mixture with a decomplexing base after completion of polymerization. The base can be added to the reaction medium or the reaction medium can be added to the base. The decomplexing base must be at least as basic towards the Lewis acid as the basic groups on the polymer chain. Such decomplexation should be effected before isolation of the polymer from the reaction mixture.

The amount of decomplexing base used should be in excess of the total amount of bound (complexed) and unbound Lewis acid present in the reaction mixture and is preferably twice the total amount of Lewis acid. Typical decomplexing bases which can be used include water, dilute aqueous hydrochloric acid, methanol, ethanol, acetone, N,N-dimethylformamide, N,N-dimethylacetamide, pyridine, dimethyl ether, diethyl ether, tetrahydrofuran, trimethylamine, trimethylamine hydrochloride, dimethyl sulfide, tetramethylenesulfone, benzophenone, tetramethylammonium chloride, and isopropanol. The decomplexed polymer can then be removed by conventional techniques such as separating the polymer by filtration; adding a nonsolvent for the polymer which is a solvent for or miscible with the Lewis acid/Lewis base complex and the Lewis acid; spraying the reaction medium into a non-solvent for the polymer; or evaporating the volatiles from the reaction medium and then washing with an appropriate solvent to remove any remaining base/catalyst complex and diluent from the polymer.

In recovery of the polymer from the reaction mixture, the reaction mixture can be liquefied, if desired by the method described in application Serial No. 594,502, filed March 29, 1984 of R. Reamey, the disclosure of which is incorporated herein by reference.

The following examples illustrate the preparation of typical copolymers of this invention.

Example 1

The following standard procedure was used to prepare copolymers of terephthaloyl chloride, diphenyl ether and 1,4-diphenoxybenzene. The amounts of components used in each of 5 runs are given in Table I.

To a 100 ml resin kettle, add $AlCl_3$ (Witco #0099), LiCl (Alpha) and 25 ml dichloroethane to make a slurry. Cool to about −15°C and stir with mechanical stirrer under $N_2$. Make solution of monomers in 31.1 ml of dichloroethane. Add dropwise to slurry over 15 minutes at −15°C. Place reaction in 0°C bath and continue stirring for 24 hours.

Work-up — Take reaction mixture and place in blender containing approximately 400 ml 10% (V/V) HCl, blend for five minutes. Filter, wash with 1 liter $H_2$. Blend for 5 minutes in a 400 ml MeOH. Filter, wash with 500 ml MeOH. Stir polymer in 400 ml MeOH at approximately 50°C overnight. Filter, wash with 1 liter $H_2O$. Reflux in 500 ml $H_2O$ for 2 hours, filter (2X) and dry.

TABLE I

| Run | $AlCl_3$ | LiCl | DCE | TCL | DPE | DPB |
|---|---|---|---|---|---|---|
| A | 11.000 g | 1.060 g | 56 ml | 5.076 | 6.558 g | — |
| B | 22.000 g | 2.12 g | 56 ml | 10.1512 g (50 mmol) | 6.808 g (40 mmol) | 2.6235 g (10 mmol) |
| C | 22.000 g | 2.12 g | 56 ml | 10.151 g (50 mmol) | 4.255 g (25 mmol) | 6.558 g (25 mmol) |
| D | 22.000 g | 2.12 g | 56 ml | 10.151 g (50 mmol) | 1.704 g (10 mmol) | 10.492 g (40 mmol) |
| E | 22.000 g | 2.12 g | 56 ml | 10.151 g (50 mmol) | — | 13.115 g (50 mmol) |

DCE = dichloroethane
TCL = terephthaloyl chloride
DPE = diphenyl ether
DPB = 1,4-diphenoxybenzene

The inherent viscosity (IV) of each polymer sample produced was determined according to the method of Sorenson et al, "Preparative Methods of Polymer Chemistry" Interscience (1968), at page 44 [0.1 g

polymer dissolved in 100 ml of concentrated sulphuric acid at 25°C]. The melting point of each sample was also determined. The results are shown in Table II.

TABLE II

| Run | DPE/DPB | IV | M.P. (°C) |
|---|---|---|---|
| A | 100/0 | 0.49 | 380 |
| B | 80/20 | 0.54 | 378 |
| C | 50/50 | 0.62 | 365 |
| D | 20/80 | 1.38 | 359 |
| E | 0/100 | 2.55 | 341 |

A graph showing the molecular weight as measured by the inherent viscosity versus the mole % of diphenyl ether used is shown in Figure 2. As demonstrated by the graph the inherent viscosity obtained increases with a decreasing amount of diphenyl ether in the copolymer and a corresponding increase in the amount of diphenoxybenzene.

The ultraviolet (UV) and visible spectra of each sample was analysed and the normalised absorption at 452 nonometers (nm) was determined. Absorbance at this wavelength is due to the presence of trisaryl carbonium ions (due to the formation of xanthydrol end groups). The reduction in xanthydrol end group formation is shown in the graph of Fig. 1 versus the mole % of diphenoxybenzene. As can be seen, the amount of tris aryl carbonium ion in the polymer decreases as the proportion of diphenoxybenzene increases and thus the amount of diphenyl ether decreases.

Example 2

This example illustrates the preparation in $HF/BF_3$ of a copolymer of terephthaloyl chloride, diphenyl ether and 1,4-phenoxybenzene, with a diphenyl ether to diphenoxybenzene ratio of 20:80.

To a 120 ml Kel-F reactor tube was added 0.3474 g (0.00204 mole) diphenyl ether, 2.1415 g (0.00816 mole) 1,4-diphenoxybenzene, and 2.0725 g (0.0102 mole) terephthaloyl chloride. The sealed reactor tube was cooled in a Dry Ice-acetone bath, followed by addition of 20 ml anhydrous HF (Matheson, 99.9%) and a magnetic stir bar. The reactor tube was then attached to a Kel-F manifold and 30 psi of $BF_3$ pressure was applied. The reactor tube being immersed in air at room temperature gradually warmed up, resulting in a clear solution. The system was degassed twice (slowly) to allow evolved HCl to escape, pressurised to 30 psi $BF_3$, and stirred for 16 hours at room temperature (24°C). The resulting red viscous solution was cooled in an ice bath, slowly vented to ambient pressure, and diluted with 70 ml HF. The resulting low viscosity solution was slowly poured into ca. 750 ml ice-water mixture which was rapidly agitated in a Waring blender. The resulting precipitated polymer suspension was allowed to stand for ca. 30 min, followed by filtration to collect the polymer, and washing with water on the filter. Re-blending of the pink filter cake in MeOH resulting in a nearly colorless fluffy product. This was soaked in water (ca. 30 min) and in methanol (ca. 30 min), followed by recovery and drying (2 hr. at 160°C).

The resulting off-white copolymer (3.40 g) had an inherent viscosity of 2.83, and pressed (3 min/400°C) to a tough flexible (both quenched and annealed) slab. DSC (from 100 to 400°C at 20 degrees/min) of the quenched slab showed Tg at 165.5°C, crystallization exotherm at 196 degrees, and Tm endotherm maximum at 351 degrees (4.66 cal/g.).

Example 3

This example illustrates the preparation in $HF/BF_3$ of a copolymer of terephthaloyl chloride, diphenyl ether and 1,-4-diphenoxybenzene, with a diphenyl ether; diphenoxybenzene ratio of 50:50.

To a 60 ml Kel-F (polychlorotrifluoroethylene, Toho Kasei Co., Ltd., Osaka, Japan) reactor tube was added 0.4255 g (0.00250 mole) diphenyl ether, 0.6557 g (0.00250 mole) 1,4-diphenoxybenzene and 1.0151 g (0.00500 mole) terephthaloyl chloride. The sealed reactor tube was cooled in a Dry Ice-acetone bath, followed by addition of 10 ml anhydrous HF (Matheson, 99.9%) and a magnetic stir bar. The reactor tube was then attached to a Kel-F manifold and 30 psi of $BF_3$ pressure was applied. The reactor tube being immersed in air at room temperature gradually warmed up, resulting in a clear solution. The system was degassed twice (slowly) to allow evolved HCl to escape, pressurized to 30 psi $BF_3$, and stirred for 16 hours at room temperature (24°C). The resulting red viscous solution was cooled in an ice bath, slowly vented to ambient pressure, and diluted with 40 ml HF. The resulting low viscosity solution was slowly poured into ca. 500 ml ice-water mixture which was rapidly agitated in a Waring blender. The resulting precipitated polymer suspension was allowed to stand for ca. 30 min, followed by filtration to collect the polymer, and washing with water on the filter. Re-blending of the pink filter cake in MeOH resulted in nearly colorless fluffy product. This was soaked in water (ca. 30 min) and in methanol (ca. 30 min), followed by recovery and drying (2 hr. at 160°C).

The resulting off-white copolymer (1.14 g) had an inherent viscosity of 2.05 (0.1 g/conc. $H_2SO_4$), and pressed (3 min/400°C) to a tough flexible (both quenched and annealed) slab. DSC (from 100 to 400°C at 20 degrees/min.) of the quenched slab showed Tg at 166.8°C, crystallation exotherm at 203°C, and Tm endotherm maximum at 358°C (4.1 cal/g.).

Example 4

This example illustrates the preparation in $HF/BF_3$ of a copolymer of terphthaloyl chloride, diphenyl ether and 1,4-diphenoxybenzene, with a diphenyl ether; diphenoxybenzene ratio of 80:20.

To a 120 ml Kel-F reactor tube was added 1.3695 g (0.00805 mole) diphenyl ether, 0.5278 g (0.00201 mole) 1,4-diphenoxybenzene and 2.0419 g (0.01006 mole) terphthaloyl chloride. The sealed reactor tube was cooled in a Dry Ice-acetone bath, followed by addition of 20 ml anhydrous HF (Matheson, 99.9%) and a magnetic stir bar. The reactor tube was then attached to a Kel-F manifold and 30 psi of $BF_3$ pressure was applied. The reactor tube being immersed in air at room temperature gradually warmed up, resulting in a clear solution. The system was degassed twice (slowly) to allow evolved HCl to escape, pressurized to 30 psi $BF_3$, and stirred for 16 hours at room temperature (24°C). The resulting red viscous solution was cooled in an ice bath, slowly vented to ambient pressure, and diluted with 60 ml HF. The resulting low viscosity solution was slowly poured into ca. 700 ml ice-water mixture which was rapidly agitated in a Waring blender. The resulting precipitated polymer suspension was allowed to stand for ca. 30 min, followed by filtration to collect the polymer, and washing with water on the filter. Re-blending of the pink filter cake in MeOH resulted in nearly colorless fluffy product. This was soaked in water (ca. 30 min) and in methanol (ca. 30 min), followed by recovery and drying (2 hr. at 160°C).

The resulting off-white copolymer (2.50 g) had an inherent viscosity of 1.75, and pressed (3 min/400 degrees) to a tough flexible (both quenched and annealed) slab. DSC (from 100 to 400°C at 20 degrees/min) of the quenched slab showed Tg at 171.5°C, crystallization exotherm at 204°C, and Tm endotherm maximum at 361°C (3.62 cal/g.) The solution (with and without dilution) was coated on the inside walls of a large vial, followed by drying/24 degrees in a nitrogen stream, washing with excess methanol and water, and drying at 120°C/vacuum to give colorless, transparent and flexible films.

**Claims**

1. An (aryl ether ketone) copolymer having recurring units of the formula

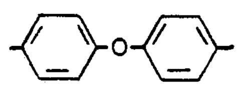 A

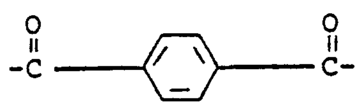 B

and

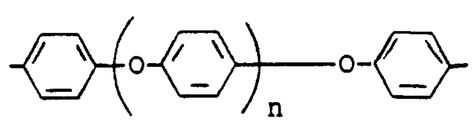 ,C

where n is 1 or 2, the total number of A and C recurring units being equal to the number of B recurring units, and having an inherent viscosity measured on 0.1 grammes of the polymer dissolved in 100 ml of concentrated sulphuric acid at 25°C, of at least 0.6.

2. A copolymer in accordance with claim 1 having the recurring units.

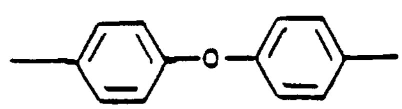 A

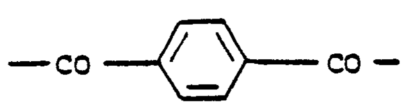 B

and

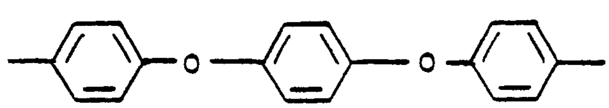 C

3. A copolymer in accordance with Claim 2 wherein the ratio of recurring units of the formula

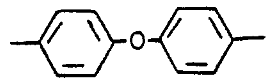 A .

to recurring units of the formula

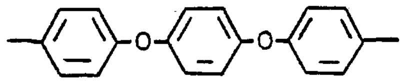 C

is 80:20.

4. A copolymer in accordance with Claim 2 wherein the ratio of recurring units of the formula

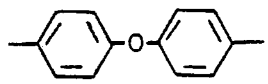 A

to recurring units of the formula

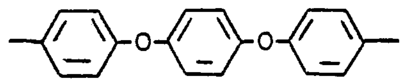 C

is 50:50.

5. A copolymer in accordance with claim 2 wherein the ratio of recurring units of the formula

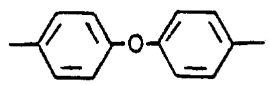 A

to recurring units of the formula

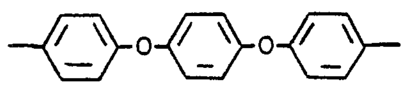 C

is 20:80.

6. A copolymer in accordance with any preceding claim, wherein the inherent viscosity is not greater than 2.

7. A copolymer in accordance with any preceding claim having an inherent viscosity greater than about 0.8.

8. A copolymer in accordance with claim 1 or claim 2 having an inherent viscosity greater than about 1.0.

9. A method of preparing a copolymer according to any preceding claim which comprises polymerising under Friedel-Crafts conditions in the presence of a Lewis acid,

(a) 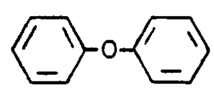

(b) 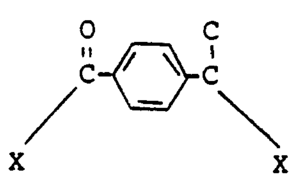

and

(c) 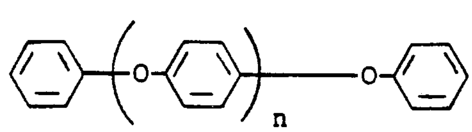

wherein X is a group displaceable under the Friedel-Crafts polymerization conditions, n is 1 or 2, and the number of moles of (a) plus (c) is equal to the number of moles of (b).

10. A method in accordance with Claim 9 wherein the monomers comprise terephthaloyl chloride, diphenyl ether and 1,4-diphenoxybenzene.

11. A method in accordance with Claim 9 wherein the reaction is conducted in the presence of boron trifluoride and hydrogen fluoride.

12. A method in accordance with Claim 9 wherein the Lewis acid is aluminum trichloride.

13. A method in accordance with Claim 12 wherein a Lewis base is also present.

14. A method in accordance with Claim 13 wherein the Lewis base is lithium chloride.

**Patentansprüche**

1. Aryletherketon-Copolymer, das Repetiereinheiten der Formel

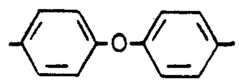

A

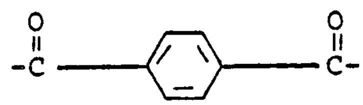

B

und

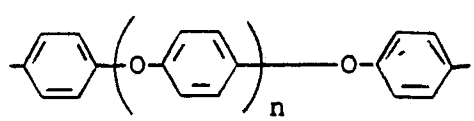

,C

aufweist, wobei n = 1 oder 2 ist, bei dem die Gesamtzahl der Repetiereinheiten A und C gleich der Zahl der Repetiereinheiten B ist, und das eine Eigneviskosität gemessen an 0,1 g des in 100 ml konzentrierter Schwefelsäure gelösten Polymeren bei 25°C, von mindestens 0,6 aufweist.

2. Copolymer gemäß Anspruch 1, das die Repetiereinheiten

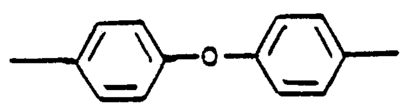

A

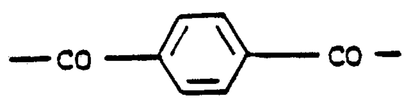

B

und

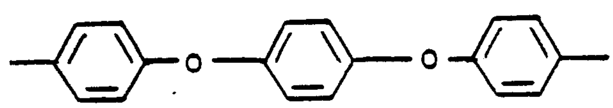

C

aufweist.

3. Copolymer gemäß Anspruch 2, in welchem das Verhältnis Repetiereinheiten der Formel

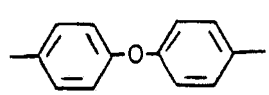

A

zu Repetiereinheiten der Formel

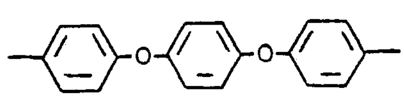

C

80:20 ist.

4. Copolymer gemäß Anspruch 2, in welchem das Verhältnis Repetiereinheiten der Formel

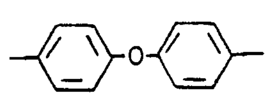

A

zu Repetiereinheiten der Formel

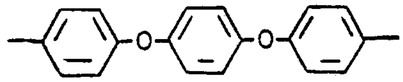

C

50:50 ist.

5. Copolymer gemäß Anspruch 2, in welchem das Verhältnis Repetiereinheiten der Formel

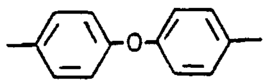

A

zu Repetiereinheiten der Formel

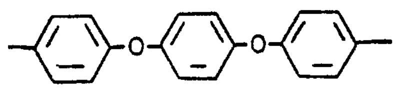

C

20:80 ist.

6. Copolymer gemäß einem der vorangehenden Ansprüche, in welchem die Eigenviskosität nicht größer als 2 ist.

7. Copolymer gemäß einem der vorangehenden Ansprüche, eine größer als etwa 0,8 aufweisend.

8. Copolymer gemäß Anspruch 1 oder 2, eine Eigenviskosität größer als etwa 1,0 aufweisend.

9. Verfahren zur Herstellung eines Copolymeren gemäß einem der vorangehenden Ansprüche, welches unter Friedel-Crafts-Bedingungen in Gegenwart einer Lewis-Säure die Polymerisation von

(a) 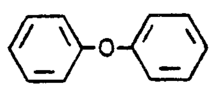

(b) 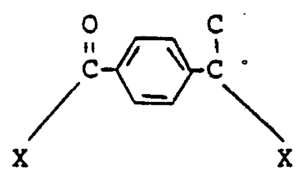

und

(c) 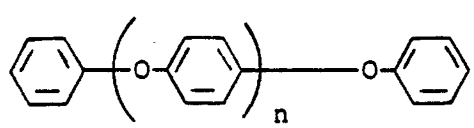

wobei X eine unter Bedingungen der Friedel-Crafts-Polymerisation ersetzbare Gruppe ist, n = 1 oder 2 ist und die Anzahl der Mole (a) plus (c) gleich der Anzahl der Mole (b) ist, umfaßt.

10. Verfahren gemäß Anspruch 9, in welchem die Monomeren Terephthalsäurechlorid, Diphenylether und 1,4-Diphenoxy-benzol umfassen.

11. Verfahren gemäß Anspruch 9, in welchem die Reaktion in Gegenwart von Bortrifluorid und Fluorwasserstoff durchgeführt wird.

12. Verfahren gemäß Anspruch 9, in welchem die Lewis-Säure Aluminiumtrichlorid ist.

13. Verfahren gemäß Anspruch 12, in welchem auch eine Lewis-Base vorhanden ist.

14. Verfahren gemäß Anspruch 13, in welchem die Lewis-Base Lithiumchlorid ist.

**Revendications**

1. Copolymère d'(aryl éther cétone) ayant des motifs répétitifs de formules

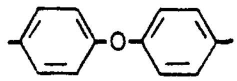

A

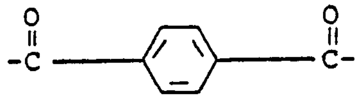

B

et

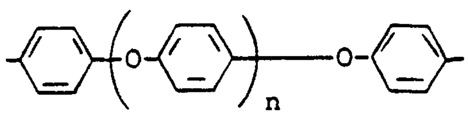

,C

où n est 1 ou 2, le nombre total des motifs répétitifs A et C étant égal au nombre des motifs répétitifs B et ayant une viscosité inhérente, mesurée sur 0,1 g de polymère dissous dans 100 ml d'acide sulfurique concentré à 25°C, d'au moins 0,6.

2. Copolymère selon la revendication 1 ayant les motifs répétitifs

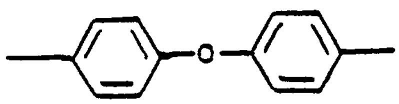

A

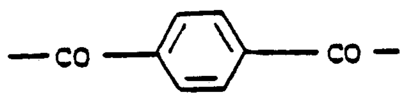

B

et

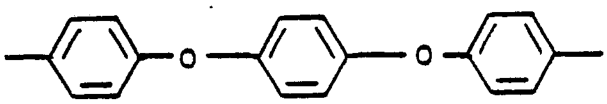

C

3. Copolymère selon la revendication 2 dans lequel le rapport des motifs répétitifs de formule

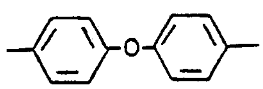

A

aux motifs répétitifs de formule

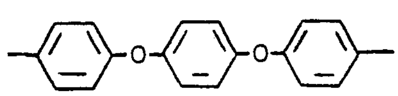

C

est de 80/20.

4. Copolymère selon la revendication 2 dans leqslon la revendication 2 dans lequel le rapport des motifs répétitifs de formule

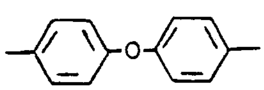

A

aux motifs répétitifs de formule

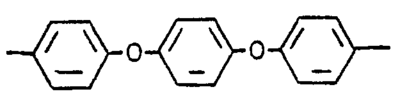

C

est de 50/50.

5. Copolymère selon la revendications 2 dans lequel le rapport des motifs répétitifs de formule

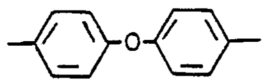

A

aux motifs répétitifs de formule

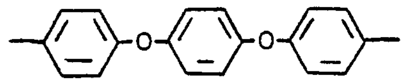

C

est de 20/80.

6. Copolymère selon l'une quelconque des revendications précédentes dont la viscosité inhérente n'est pas supérieure à 2.

7. Copolymère selon l'une quelconque des revendications précédentes ayant une viscosité inhérente supérieure à environ 0,8.

8. Copolymère selon la revendication 1 ou la revendication 2 ayant une viscosité inhérente supérieure à environ 1,0.

9. Procédé de préparation d'un copolymère selon l'une quelconque des revendications précédentes qui comprend la polymérisation, dans des conditions de Friedel-Crafts en présence d'un acide de Lewis, de

(a)

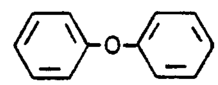

(b)

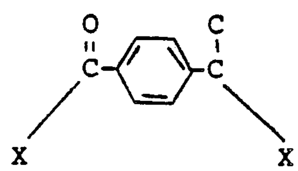

et

(c)

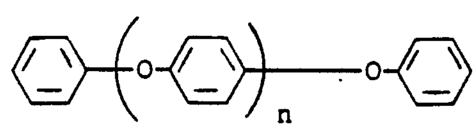

où X est un groupe déplaçable dans les conditions de réaction de polymérisation de Friedel-Crafts, n est 1 ou 2 et le nombre des moles de (a) plus (c) est égal au nombre des moles de (b).

10. Procédé selon la revendication 9 dans lequel les monomères comprennent le chlorure de téréphtaloyle, l'éther diphénylique et le 1,4-diphénoxybenzène.

11. Procédé selon la revendication 9 dans lequel la réaction est effectuée en présence de trifluorure de bore et de fluorure d'hydrogène.

12. Procédé selon la revendication 9 dans lequel l'acide de Lewis est le trichlorure d'aluminium.

13. Procédé selon la revendication 12 dans lequel une base de Lewis est également présente.

14. Procédé selon la revendication 13 dans lequel la base de Lewis est le chlorure de lithium.

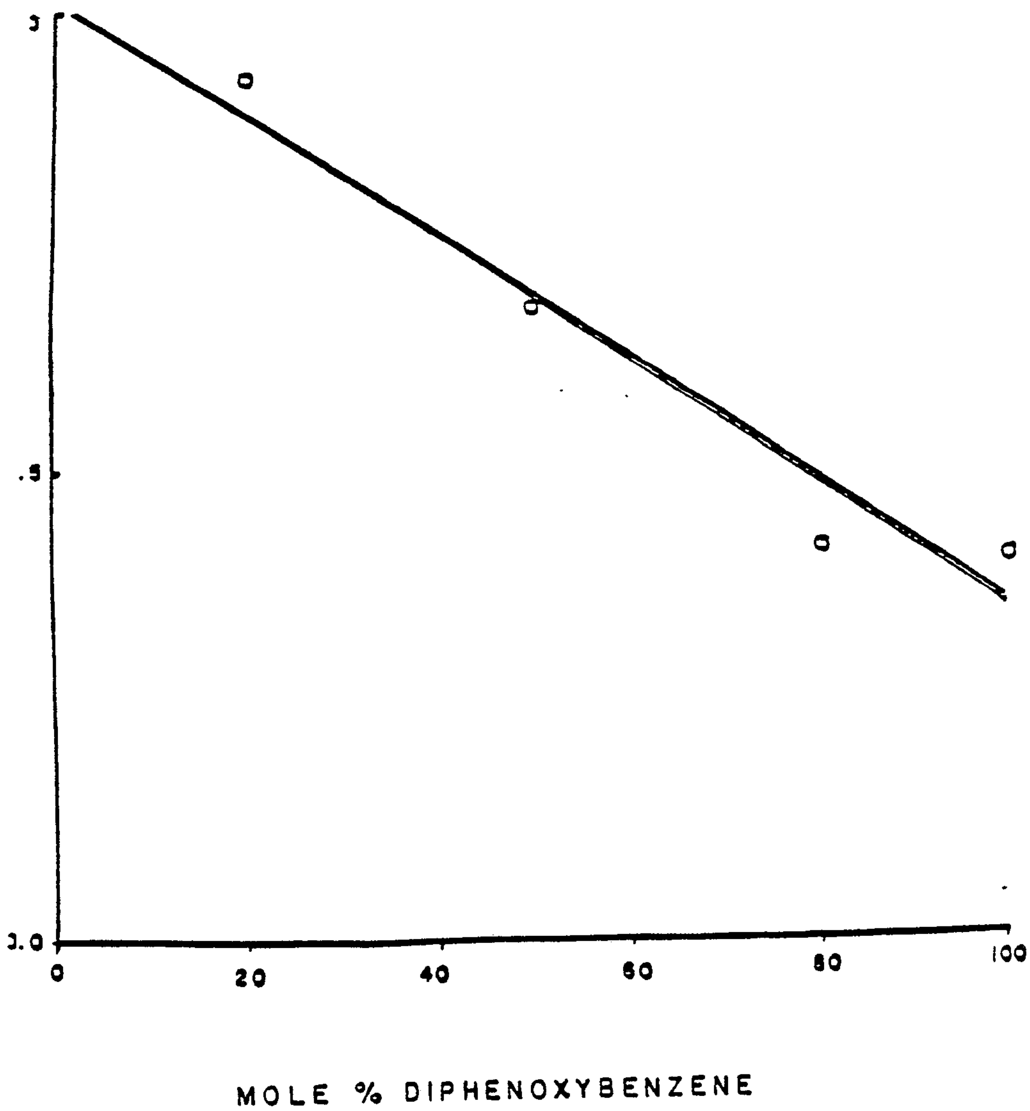


FIG_1

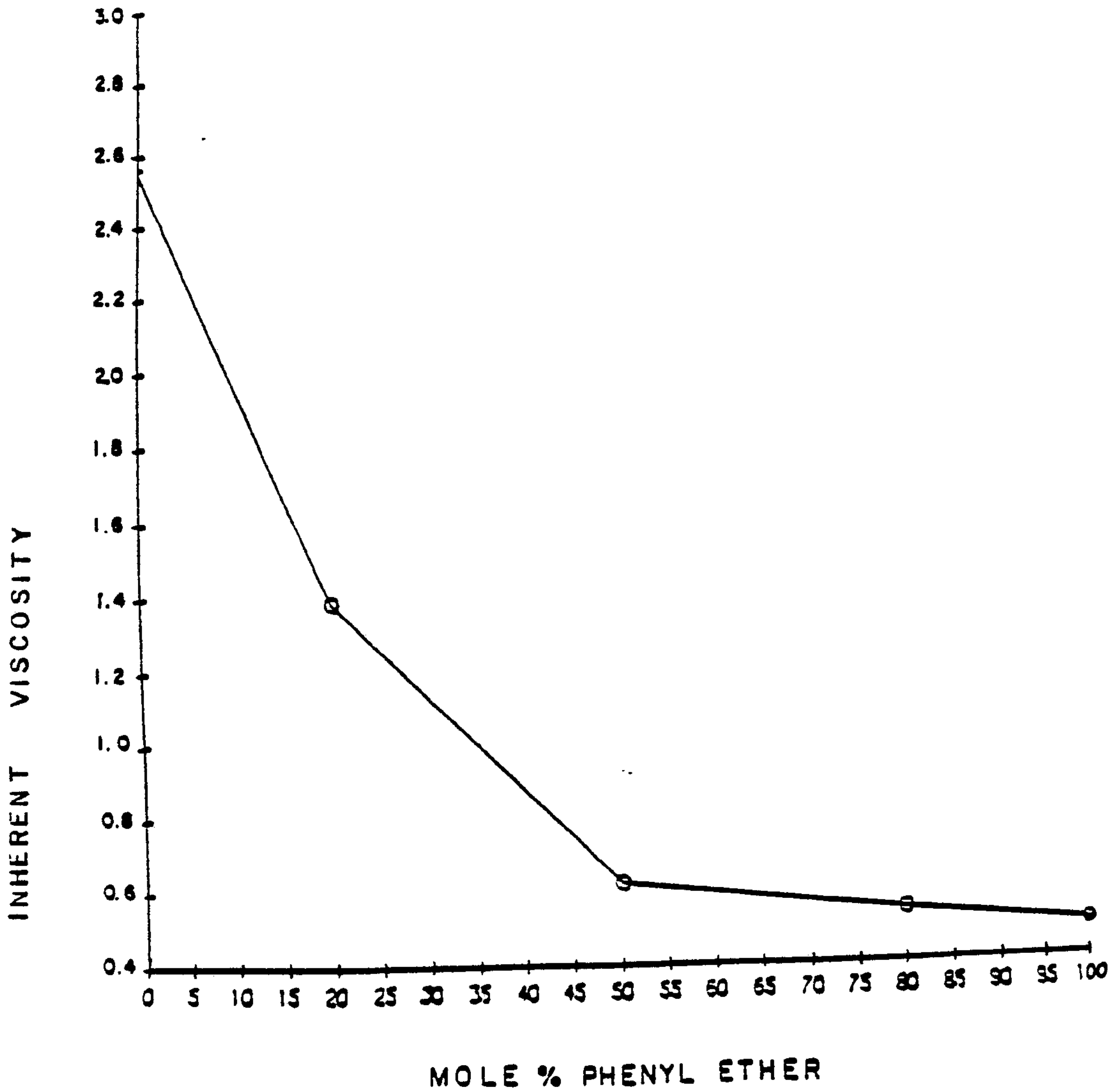
3.0
2.8
2.6
2.4
2.2
2.0
1.8
1.6
1.4
1.2
1.0
0.8
0.6
0.4
INHERENT VISCOSITY
0 5 10 15 20 25 30 35 40 45 50 55 60 65 70 75 80 85 90 95 100
MOLE % PHENYL ETHER

FIG_2